# EUROPÄISCHE PATENTSCHRIFT

(11) **EP 0 651 194 B1**
(45) Veröffentlichungstag und Bekanntmachung des Hinweises auf die Patenterteilung: **03.09.1997**
(21) Anmeldenummer: 94116704.1
(22) Anmeldetag: 22.10.1994
(51) Int. Cl.: F16L 5/04, A62C 2/06

(54) **Vorrichtung zum Abschotten und gleichzeitiger Reduzierung der Schallübertragung**
Partitioning device with simultaneously reducing of the sound transmission
Dispositif de cloisonnement et de réduction simultanée de la transmission du bruit

(30) Priorität: 29.10.1993 DE 4336964
(43) Veröffentlichungstag der Anmeldung: 03.05.1995
(73) Patentinhaber: Friatec Aktiengesellschaft Keramik- und Kunststoffwerke, D-68229 Mannheim (DE)
(72) Erfinder: Schulze, Hans, D-68535 Edingen-Neckarhausen (DE)
(74) Vertreter: Klose, Hans, Dipl.-Phys.

(56) Entgegenhaltungen:
- EP-A- 0 344 868
- WO-A-91/04074
- FR-A- 2 348 328
- FR-A- 2 376 926
- FR-A- 2 405 338
- US-A- 4 848 043

## Beschreibung

Die Erfindung betrifft eine Vorrichtung zum Abschotten und zur gleichzeitigen Reduzierung der Schallübertragung einer Durchführung gemäß den im Oberbegriff des Patentanspruchs 1 angegebenen Merkmalen.

Aus der WO-A-91 04 074 ist eine derartige Vorrichtung mit einem formfesten Gehäuse aus nicht brennbarem Material bekannt. Das Gehäuse umgibt ein im Bereich der Durchführung vorgesehenes Rohr, wobei zwischen dem Rohr und dem Gehäuse ein Ringraum vorhanden ist. In diesem Ringraum ist das durch Wärmeeinwirkung sich ausdehnende Blähmaterial vorgesehen, welches vorzugsweise in Beuteln angeordnet ist. Diese Beutel mit dem Blähmaterial sind innerhalb des Gehäuses um das Rohr herum gelegt, wobei Federmittel vorgesehen sein können, um das Blämaterial gegen die Außenfläche des Rohres zu drücken. Das Blähmaterial bildet eine Schallbrücke zwischen dein Rohr und dem Gehäuse, welches in bekannter Weise in die Durchführung einer Wand oder Decke eingebaut ist. Es ist somit die Schallübertragung vom Rohr auf das Gebäude möglich, wobei insbesondere in Abwassersystemen der Hausinstallation infolge des strömenden Wassers durch Körperschallübertragung erhebliche Beeinträchtigungen entstehen können.

In der deutschen Zeitschrift "Der Bau, 12/1958, Seiten 333-338" ist der Aufbau geräuscharmer haustechnischer Anlagen im Wohnungsbau beschrieben, wobei das Prinzip einer bauakustisch richtigen vertikalen Rohrdurchführung durch eine Decke mit schwimmendem Estrich ebenso beschrieben ist wie eine körperschallhemmende Befestigung von Rohrleitungen mittels Dämmaterial. Das Rohr wird unabhängig der jeweiligen Deckenkonstruktion mittels einer Isoliermanschette umgeben, welche beispielsweise aus gepresstem Faserdämmstoff bestehen kann, um die Entstehung von Schallbrücken zu vermeiden. Da ferner aus Gründen der thermischen Ausdehnung von Rohrleitungen grundsätzlich eine freie Durchführung durch eine Decke angestrebt wird, können in der Decke Rohrstutzen mit erheblich größeren Durchmessern als die Rohrleitung verlegt werden, wobei der Zwischenraum von Rohrleitung und Rohrstutzen mit geeignetem Dämmaterial ausgefüllt wird. Bei unsachgemäßer Ausführung, sei es durch mangelhaftes Ausfüllen des Zwischenraumes oder durch Eindringen von Fremdkörpern, sind in der Praxis Beeinträchtigungen der Geräuschdämmung gleichwohl festzustellen.

Ferner muß vor allem in größeren Gebäuden aufgrund von Sicherheitsvorschriften eine Unterteilung in Brandabschnitte mittels der Decken oder Wände erreicht werden. Bei den Decken- und Wanddurchführungen gelangen daher Brandschutzeinrichtungen in Form von Brandschutzmanschetten oder dergleichen zum Einsatz, welche das Rohr auf der Außenseite umgeben und mit der Decke oder der Wand in geeigneter Weise verbunden sind. Derartige Brandschutzeinrichtungen enthalten regelmäßig Blähmaterial, welches sich durch Hitzeeinwirkung ausdehnt und das Rohr zusammendrückt, so daß die Rohröffnung und der Wand- oder Deckendurchbruch verschlossen wird. Das Blähmaterial besitzt feuerfeste Eigenschaften, um den Durchtritt von Feuer zu unterbinden. Bei der Montage wird die Brandschutzeinrichtung mit der Decke des Gebäudes verbunden und es besteht die Gefahr, daß im Zuge weiterer Montagearbeiten zwischen dem Rohr und der Wand bzw. Decke eine Körperschallbrücke entsteht, welche eine Körperschallübertragung vom Rohr auf das Gebäude ermöglicht. Es bedarf keiner besonderen Hervorhebung, daß insbesondere in Abwassersystemen der Hausinstallation infolge des strömenden Wassers durch Körperschallübertragung erhebliche Beeinträchtigungen aufgrund der übertragenen Schwingungen entstehen. Dies gilt gleichermaßen für Sanitärinstallationen, Heizungssysteme oder dergleichen.

Der Erfindung liegt daher die Aufgabe zugrunde, eine Vorrichtung vorzuschlagen, welche in Verbindung mit einer Brandschutzeinrichtung die Entstehung von Körperschallbrücken verhindert und/oder die Körperschallübertragung weitestgehend reduziert. Die Vorrichtung soll in einfacher Weise handhabbar sein und einen geringen Fertigungs- und Montageaufwand erfordern. Die Vorrichtung soll eine kompakte Bauform aufweisen und die Montage und/oder Befestigung der eigentlichen Brandschutzeinrichtung in keiner Weise erschweren oder aufwendiger gestalten.

Die Lösung dieser Aufgabe erfolgt gemäß den im kennzeichnenden Teil des Anspruchs 1 angegebenen Merkmalen.

Die erfindungsgemäß vorgeschlagene Vorrichtung zeichnet sich durch eine einfache und funktionsgerechte Konstruktion aus und mindert ohne besonderen Aufwand wesentlich die Gefahren der Körperschallübertragung im Bereich einer Durchführung, insbesondere einer Decke. Die Vorrichtung ist als Haube für die Brandschutzeinrichtung ausgebildet und umgibt im Bereich der Durchführung das Rohr, wobei zwischen der Außenseite des Rohres und der Vorrichtung in zweckmäßiger Weise Schall-Dämmaterial angeordnet ist. Ferner übergreift die Vorrichtung, bevorzugt mit einem erweiterten Bereich, die Brandschutzeinrichtung. Die erfindungsgemäße Vorrichtung bildet eine Schallschutzhaube, welche das Eindringen von Fremdkörpern in den Bereich der Brandschutzeinrichtung und/oder zwischen das Rohr und die Deckendurchführung verhindert.

Weiterbildungen und besondere Ausgestaltungen der erfindungsgemäßen Vorrichtung sind in den Unteransprüchen angegeben.

Die Erfindung wird nachfolgend anhand des in der Zeichnung dargestellten Ausführungsbeispiels näher erläutert. Es zeigen:
- Fig. 1: eine Prinzipdarstellung der Vorrichtung, zusammen mit der Brandschutzeinrichtung,
- Fig. 2: eine Ansicht in Blickrichtung II gemäß Fig. 1.

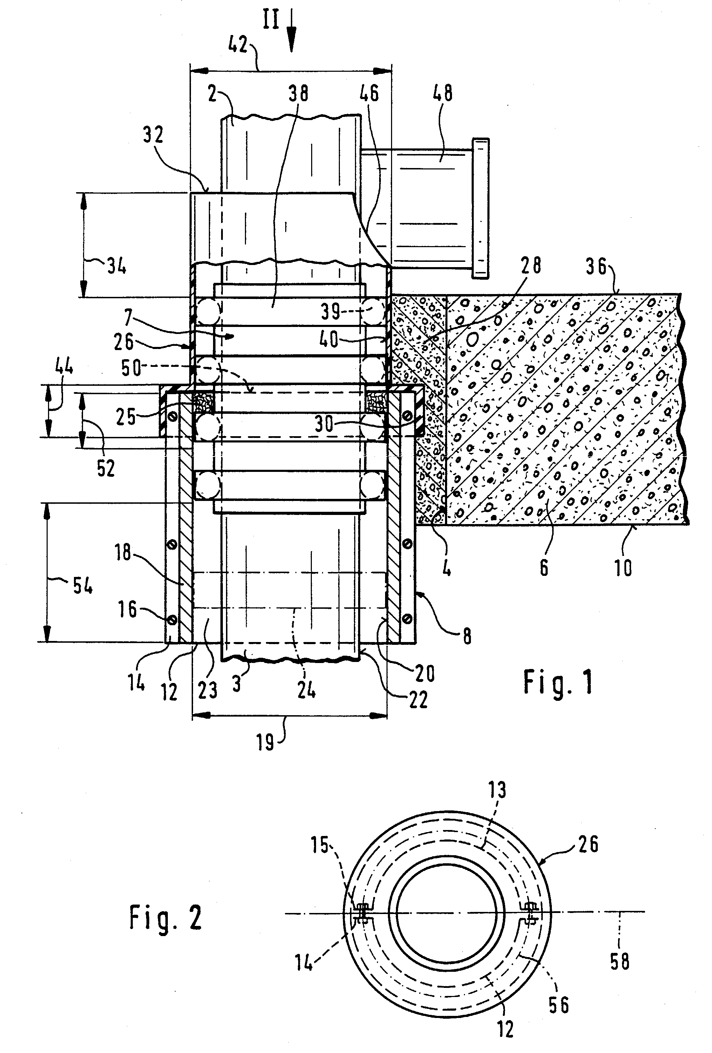

Fig. 1 zeigt schematisch zwei Rohre 2, 3, welche durch eine Durchführung 4 einer Decke 6 eines Gebäudes hindurchgeführt und mittels einer Doppelmuffe 7 miteinander verbunden sind. Aus Gründen der vereinfachten Darstellung ist die Decke links der Rohre 2, 3 nicht weiter dargestellt. In der Durchführung 4 ist eine die Rohre 2, 3 sowie die Doppelmuffe 7 umgebende Brandschutzeinrichtung 8 angeordnet, welche teilweise bis unter die Unterkante 10 der Decke 6 reicht. Die Brandschutzeinrichtung 8 enthält zwei im wesentlichen zylindrische Halbschalen 12, welche zur gegenseitigen Verbindung jeweils zwei Flansche 14 aufweisen.

Mittels der Flansche 14 oder anderen ggf. auch scharnierartig ausgebildeten Verbindungselementen erfolgt im Rahmen der Erfindung die Verbindung der Halbschalen nach deren Anordnung außen um die Rohre 2, 3 sowie die Doppelmuffe 7 herum. Anstelle der in der Zeichnung dargestellten Doppelmuffe, welche in besonders zweckmäßiger Weise auch einen Dehnungsausgleich zwischen den beiden Rohren 2, 3 ermöglicht, könnte im Rahmen dieser Erfindung auch nur eine einfache Muffe vorgesehen sein, welche beispielsweise Bestandteil des unteren Rohres 3 ist. Die Brandschutzeinrichtung ist bevorzugt derart ausgebildet, daß die Doppelmuffe 7 oder eine andere Muffe innerhalb der Brandschutzeinrichtung 8 angeordnet werden kann.

Die genannten Halbschalen 12 bestehen aus Metall, sind mittels Schrauben 16 an den genannten Flanschen 14 miteinander verbunden und enthalten auf ihrer Innenseite eine Schicht 18 aus Blähmaterial. Dieses Blähmaterial ist derart ausgebildet und angeordnet, daß im Falle eines Brandes und der hierbei entstehenden Hitzeeinwirkung es sich radial nach innen ausdehnt, das plastisch werdende Rohr 2 aus Kunststoff zusammendrückt und insgesamt die Durchführung absperrt. Zwischen der Innenfläche 20 der Schicht 18 und der Außenfläche 22 des Rohres 3 ist bevorzugt ein definierter Ringspalt 23 mit einem vorgegebenen Abstand vorgesehen. In diesem Ringspalt 23 weist die Brandschutzeinrichtung 8 in zweckmäßiger Weise eine bevorzugt ringförmig angeordnete Schicht 24 aus schalldämmendem Material auf. Diese hier nur schematisch angedeutete Schicht 24 verhindert die direkte Körperschallübertragung von den Rohren 2, 3 auf das Blähmaterial 18, ferner das Gehäuse bzw. die Halbschalen der Brandschutzeinrichtung und letztendlich auf die Decke 6.

Die Brandschutzeinrichtung 8 ist erfindungsgemäß mit der als Schallschutzhaube ausgebildeten Vorrichtung 26 kombiniert, welche eine Körperschallübertragung im Bereich einer Decken- oder Wanddurchführung erheblich mindert. Mittels der Schallschutzhaube wird gewährleistet, daß nach der Montage der Brandschutzeinrichtung 8, vor allem beim Ausgießen der Durchführung 4 mittels Mörtel oder Betonverguß 28, eine Körperschallbrücke zwischen dem Rohr 2 und der Decke 6 nicht entsteht. Die Vorrichtung 26 ist oben auf die Brandschutzeinrichtung 8 aufgesetzt, umgibt zumindest im Bereich der Decke 6 gleichfalls das Rohr 2. In bevorzugter Weise übergreift die Vorrichtung 26 in einem überlappenden und/oder erweiterten Bereich 30 die Brandschutzeinrichtung 8. Die Vorrichtung 26 ist in besonders zweckmäßiger Weise derart ausgebildet, daß ihr oberer Rand 32 in einem vorgegebenen Abstand 34 über die Oberkante 36 der Decke 6 vorsteht. Damit ist gewährleistet, daß nach dem Einbau der mit der Vorrichtung 26 kombinierten Brandschutzeinrichtung 8 praktisch keine Fremdkörper zwischen die Rohraußenfläche 22 und die Brandschutzeinrichtung und/oder die Decke 6 sich festsetzen können. Die Schallschutzhaube oder Vorrichtung 26 besteht vorzugsweise aus flexiblem Material und wird nach der Montage der Rohrleitung sowie der Brandschutzeinrichtung 8 in der dargestellten Weise im Anschluß an die Brandschutzeinrichtung 8 um das Rohr 2 und bedarfsweise um die Muffe 7 herumgelegt. Bei einteiliger Ausbildung der Vorrichtung 26 weist diese zwei aneinander stoßende oder überlappende Längskanten auf, welche im wesentlichen parallel zum Rohr 2 verlaufen, wobei insbesondere mittels eines Klebebandes oder dergleichen eine Verbindung und darüberhinaus eine Abdichtung erfolgt.

Die beiden Rohre 2, 3 sind innerhalb der Vorrichtung 26 sowie der Brandschutzeinrichtung 8 mittels der Muffe 7 verbunden, welche hier als Doppelmuffe mit vier axial beabstandeten Sicken 38 herausgebildet ist. Im Inneren jeder Sicke befindet sich ein elastisches Element und/oder Dichtring 39, um einerseits die flüssigkeitsdichte Verbindung zu gewährleisten und andererseits eine Dämpfung von Körperschallschwingungen zu ermöglichen. Die Innenfläche 40 der Vorrichtung 26 weist einen Durchmesser 42 auf, welcher zumindest gleich oder größer ist als der Außendurchmesser der Sicken 38 der Muffe bzw. Doppelmuffe 7. Von besonderer Bedeutung ist, daß mittels den Dichtringen 39, welche aus Elastomer bestehen, eine Schallentkopplung zwischen den Rohren 2, 3 einerseits und der umgebenen Vorrichtung 26 und/oder der Brandschutzeinrichtung 8 erreicht wird. Die Muffe 7 bzw. deren Sicken 38 können somit an der Innenfläche 40 der Vorrichtung 26 sowie der Innenfläche 20 der Schicht 18 aus Dämmaterial anliegen, wobei gleichwohl eine hinreichende und den Anforderungen der Praxis entsprechende Entkopplung gewährleistet ist.

Innerhalb der Brandschutzeinrichtung 8 ist zusätzlich die schalldämmende Schicht 24, insbesondere in Form wenigstens eines Ringes vorgesehen, um auch im unteren Bereich der Brandschutzeinrichtung 8 zuverlässig eine unmittelbare Anlage des Rohres 3 an der Innenfläche 20 zu verhindern. Es sei besonders darauf hingewiesen, daß der Innendurchmesser 42 der Innenfläche 40 der Schallschutzhaube 26 in zweckmäßiger Weise auf den Innendurchmesser 19 der schalldämmenden Schicht 24 abgestimmt ist und im wesentlichen gleich groß wie dieser ist. Im Rahmen der Erfindung sind die Innendurchmesser 19 und/oder 42 gleich oder größer als der Außendurchmesser der innerhalb der Vorrichtung 26 und/oder der Brandschutzeinrichtung 8 vorgesehenen Muffe 7, und zwar insbesondere deren Sicken 38. Somit ist eine vergleichsweise große axiale Toleranz für die tatsächliche Lage der Muffe bzw. der Verbindungsstelle der beiden Rohre 2. 3 in der Durchführung 4 der Decke 6 möglich. In der Zeichnung ist die praktisch symmetrische Lage der Doppelmuffe 7 zwischen der Unterkante 10 und der Oberkante 36 der Decke 6 dargestellt. Aufgrund der vorgeschlagenen Dimensionierung kann ersichtlich die Doppelmuffe 7 nach oben oder nach unten in einem vergleichsweise großen Bereich verschoben angeordnet sein, ohne daß hierdurch die Wirkungsweise der Brandschutzeinrichtung 8 zusammen mit der Schallschutzhaube 26 nachteilig beeinflußt würde.

Aufgrund des überlappenden und/oder erweiterten Bereiches 30 sitzt die Vorrichtung 26 oben auf der Brandschutzeinrichtung 8 in definierter Weise auf, so daß keine zusätzlichen Arretierungs- oder sonstigen Montagemaßnahmen notwendig sind. Die Vorrichtung 26 überlappt die Brandschutzeinrichtung 8 axial in der Länge 44 des erweiterten Bereiches 30, welcher erfindungsgemäß als ein im Schnitt etwa L-förmiger Kragen ausgebildet ist. Die Länge 44 ist erfindungsgemäß vorgegeben und liegt in zweckmäßiger Weise im Bereich zwischen 2 bis 4 cm und ist bevorzugt im wesentlichen 3 cm groß. Hierdurch wird bei optimalem Materialeinsatz ein funktionssicherer Sitz der Schallschutzhaube 26 auf der Brandschutzeinrichtung 8 erreicht. Das Eindringen von Fremdkörpern, und zwar insbesondere des Betonverguß 28 beim endgültigen Verschließen der Durchführung 4 wird zuverlässig verhindert. Die Haube 26 ist oben mit einer Ausnehmung 46 für einen Anschlußstutzen 48 des Rohres 2 versehen.

In einer alternativen Ausgestaltung beginnen die Flansche 14 nicht an der Endkante 50, welche der Schallschutzhaube 26 zugeordnet ist, sondern sie beginnen erfindungsgemäß in einem Abstand 52 unterhalb der Endkante 50 der Schallschutzhaube 26. Dieser Abstand 52 ist zweckmäßig zumindest gleich, vorzugsweise etwas größer als die Länge 44 des überlappenden Bereiches 30 der Schallschutzhaube 26. Bei dieser zweckmäßigen Ausgestaltung übergreift also der Bereich 30 nicht die Flansche 14. Abweichend von der Darstellung gemäß Fig. 1 ist bei dieser besonderen Ausführungsform der Durchmesser des überlappenden Bereiches 30 nur geringfügig größer als der Außendurchmesser der Brandschutzeinrichtung 8 bzw. deren Halbschalen 12, 13.

In einer weiteren zweckmäßigen Ausgestaltung der Erfindung erstreckt sich die Schicht 18 aus Blähmaterial nicht über die gesamte axiale Länge der Brandschutzeinrichtung 8, sondern sie erstreckt sich nur über einen Teil 54 der axialen Länge der Brandschutzeinrichtung 8. Vorzugsweise wird der Teil 54 mit der Schicht 18 bei einer Deckendurchführung vertikal unten angeordnet. Bei dieser bevorzugten Alternative ist im oberen Teil der Brandschutzeinrichtung 8 anstelle der Schicht 18 aus Blähmaterial zumindest teilweise eine schalldämmende Schicht 25 angeordnet, welche in Fig. 1 durch eine Doppelschraffur angedeutet ist. Diese Schicht 25 ist zweckmäßig aus einem oder mehreren Ringen aus schalldämmendem Material gefertigt.

Fig. 2 zeigt schematisch eine Aufsicht von oben auf die Schallschutzhaube 26, wobei ferner die beiden Halbschalen 12, 13 der Brandschutzeinrichtung durch gestrichelte Linien schematisch angedeutet sind, wobei das Rohr 2 nicht dargestellt ist. Die Schallschutzhaube 26 übergreift mit dem erweiterten Bereich 30 auch die Flansche 14, 15 der Halbschalen 12, 13. Ersichtlich ist der Innendurchmesser des erweiterten Bereiches 30 zumindest gleich, zweckmäßig größer als der maximale Außendurchmesser der Brandschutzeinrichtung, wobei in der hier dargestellten Ausführungsform der Innendurchmesser größer ist als der maximale Durchmesser der Brandschutzeinrichtung im Bereich der genannten Flansche 14, 15. Die oben erläuterte, alternative Ausführungsform der Schallschutzhaube, bei welcher die Flansche oder allgemein gesprochen die Verbindungselemente in einem vorgegebenen Abstand vom oberen Ende der Brandschutzeinrichtung beginnen, ist mittels strichpunktierten Linien 56 angedeutet.

Anstelle der einteiligen Ausbildung der Schallschutzhaube 26 kann im Rahmen der Erfindung auch eine zwei- oder mehrteilige Ausführung vorgesehen sein. So kann die Schallschutzhaube entsprechend der Brandschutzmanschette aus zwei Halbschalen bestehen, wobei die Teilungsebene wiederum in einer Axialebene liegt. Zur Verbindung der einzelnen Teile wird in zweckmäßiger Weise ein Klebeband vorgesehen, welches eine problemlose Montage sicherstellt. Die zweckmäßig vorgesehene Teilungs- bzw. Verbindungsebene 58 ist durch eine strichpunktierte Linie angedeutet. Mittels des genannten Klebebandes erfolgt nicht nur die Sicherung der beiden Halbschalen, sondern vor allem auch die Abdichtung, so daß das Eindringen von Betonverguß beim Ausgießen der Deckendurchführung verhindert wird. In zweckmäßiger Weise werden die Übergänge zwischen der Schallschutzhaube 26, und zwar insbesondere zwischen dem überlappenden oder erweiterten Bereich 30 und der Brandschutzeinrichtung 8 mittels Klebebändern vor dem Ausgießen abgedichtet. Ferner hat es sich als zweckmäßig erwiesen, im Falle einer Ausnehmung 46 oder dergleichen für einen Anschlußstutzen des Rohres 2 zumindest dort den Übergangsbereich zwischen der Schallschutzhaube 26 und dem Rohr 2 und/oder dessen Anschlußstutzen 48 aus den genannten Gründen mittels eines Klebebandes oder dergleichen abzudichten.

### Bezugszeichen

- 2, 3: Rohr
- 4: Durchführung
- 6: Decke
- 7: Muffe / Doppelmuffe
- 8: Brandschutzeinrichtung
- 10: Unterkante von 6
- 12, 13: Halbschale von 8
- 14, 15: Flansch
- 16: Schraube
- 18: Schicht
- 19: Innendurchmesser von 18
- 20: Innenfläche von 18
- 22: Außenfläche von 3
- 23: Ringspalt
- 24, 25: schalldämmende Schicht
- 26: Vorrichtung / Schallschutzhaube
- 28: Betonverguß
- 30: überlappender Bereich
- 32: oberer Rand von 26
- 34: Abstand
- 36: Oberkante von 6
- 38: Sicke von 7
- 39: Dichtring / elastisches Element
- 40: Innenfläche von 26
- 42: Innendurchmesser von 26
- 44: Länge von 30
- 46: Ausnehmung
- 48: Anschlußstutzen
- 50: Endkante
- 52: Abstand
- 54: Teil
- 56: strichpunktierte Linie
- 58: Teilungsebene

## Patentansprüche

1. Vorrichtung zum Abschotten und zur gleichzeitigen Reduzierung der Schallübertragung einer Durchführung (4) durch eine Decke (6) oder Wand eines Gebäudes, wobei in der Durchführung (4) ein Rohr (2, 3) vorgesehen ist, welche Vorrichtung eine Brandschutzeinrichtung (8) mit einer das Rohr umgebenden Schicht (18) aus Blähmaterial enthält,
dadurch gekennzeichnet, daß im Bereich der Durchführung (4) eine das Rohr (2, 3) mit Abstand umgebende Schallschutzhaube (26) axial im unmittelbaren Anschluß an die Brandschutzeinrichtung (8) vorgesehen ist,
daß die Schallschutzhaube (26) aus flexiblem Material besteht oder aus zwei Teilen zusammengesetzt ist, wobei die aneinanderstoßenden oder überlappenden Längskanten miteinander verbunden sind,
und daß zwischen der Außenfläche (22) des Rohres (3) und der Schicht (18) aus Blähmaterial wenigstens eine Schicht (24, 25) aus schalldämmendem Material vorgesehen ist.

2. Vorrichtung nach Anspruch 1, dadurch gekennzeichnet, daß innerhalb der Brandschutzeinrichtung (8) und/oder der Schallschutzhaube (26) eine Muffe (7), welche bevorzugt als Doppelmuffe ausgebildet ist, zur Verbindung der beiden Rohre (2, 3) vorgesehen ist.

3. Vorrichtung nach Anspruch 2, dadurch gekennzeichnet, daß die Muffe (7) wenigstens eine Sicke (38) und bei Ausbildung als Doppelmuffe wenigstens vier Sicken (38) enthält, wobei in der jeweiligen Sicke (38) ein Ring (39) aus elastischem Material derart angeordnet ist, daß eine unmittelbare Berührung zwischen dem Rohr (2, 3) und Muffe (7) unterbunden ist und/oder daß der Innendurchmesser (42) der Schallschutzhaube (26) wenigstens gleich oder größer ist als der Außendurchmesser der Muffe (7) und/oder deren Sicke (38) ist.

4. Vorrichtung nach Anspruch 2 oder 3, dadurch gekennzeichnet, daß die Schicht (18) aus blähbarem Material einen Innendurchmesser gleich oder größer als der Außendurchmesser der Muffe (7) oder deren Sicke (38) aufweist.

5. Vorrichtung nach einem der Ansprüche 1 bis 4, dadurch gekennzeichnet, daß der Innendurchmesser (42) der Schallschutzhaube (26) im wesentlichen gleich groß ist wie der Innendurchmesser (19) der Schicht (18) aus Blähmaterial der Brandschutzeinrichtung (8).

6. Vorrichtung nach einem der Ansprüche 1 bis 5, dadurch gekennzeichnet, daß die Schicht (24, 25) aus schalldämmendem Material ringförmig ausgebildet ist.

7. Vorrichtung nach einem der Ansprüche 2 bis 6, dadurch gekennzeichnet, daß die Schicht (25) zwischen der Außenfläche der Muffe (7) und der Innenfläche der Brandschutzeinrichtung (8) angeordnet ist.

8. Vorrichtung nach einem der Ansprüche 1 bis 7, dadurch gekennzeichnet, daß die Schallschutzhaube (26) an ihrem der Brandschutzeinrichtung (8) abgewandten Ende einen insbesondere oberen Rand (32) aufweist, welcher zu einer Oberkante (36) der Decke (6) einen vorgegebenen Abstand (34) aufweist.

9. Vorrichtung nach einem der Ansprüche 1 bis 8, dadurch gekennzeichnet, daß die im Anschluß an die Brandschutzeinrichtung (8) vorgesehene Schallschutzhaube (26) in einem vorgegebenen, bevorzugt erweiterten Bereich (30) die Brandschutzeinrichtung (8) überlappt, wobei dieser Bereich (30) insbesondere als ein im wesentlichen L-förmiger Kragen ausgebildet ist und/oder daß der Bereich (30) im Vergleich mit dem übrigen Teil der Schallschutzhaube (26) erweitert ausgebildet ist und/oder daß der Bereich (30) die Brandschutzeinrichtung (8) übergreift in einer vorgegebenen Länge, wobei die Länge (44) insbesondere zwischen 2 und 4 cm groß ist und bevorzugt im wesentlichen 3 cm beträgt.

10. Vorrichtung nach einem der Ansprüche 1 bis 9, dadurch gekennzeichnet, daß die aneinanderstoßenden oder überlappenden Längskanten der Schallschutzhaube (26) mittels eines Klebebandes oder mittels einer Klebeverbindung verbunden sind.

## Claims

1. Partitioning device for the simultaneous reduction of sound transmission in a duct (4) through a ceiling (6) or wall of a building, a pipe (2, 3) being provided in the duct (4), said device containing a fire protection means (8) with a layer (18) of expandable material surrounding the pipe, characterised in that a sound-absorbing hood (26) surrounding the pipe (2, 3) at a distance is provided immediately axially downstream of the fire protection means (8) in the region of the duct (4), that the sound-absorbing hood (26) consists of flexible material or is composed of two parts, the abutting or overlapping longitudinal edges being connected together, and that at least one layer (24, 25) of sound-insulating material is provided between the outer surface (22) of the pipe (3) and the layer (18) of expandable material.

2. Device according to claim 1, characterised in that a sleeve (7), preferably in the form of a double sleeve, is provided within the fire protection means (8) and/or the sound-absorbing hood (26) for connecting the two pipes (2, 3).

3. Device according to claim 2, characterised in that the sleeve (7) contains at least one bead (38), at least four beads (38) in the case of a double sleeve, a ring (39) of flexible material being arranged in the respective bead (38) in such a manner that there can be no direct contact between the pipe (2, 3) and the sleeve (7) and/or that the internal diameter (42) of the sound-absorbing hood (26) is at least equal to or greater than the external diameter of the sleeve (7) and/or its bead (38).

4. Device according to claim 2 or claim 3, characterised in that the layer (18) of expandable material has an internal diameter equal to or greater than the external diameter of the sleeve (7) or its bead (38).

5. Device according to one of claims 1 to 4, characterised in that the internal diameter (42) of the sound-absorbing hood (26) is substantially equal to the internal diameter (19) of the layer (18) of expandable material of the fire protection means (8).

6. Device according to one of claims 1 to 5, characterised in that the layer (24, 25) of sound-insulating material is annular.

7. Device according to one of claims 2 to 6, characterised in that the layer (25) is arranged between the outer surface of the sleeve (7) and the inner surface of the fire protection means (8).

8. Device according to one of claims 1 to 7, characterised in that the sound-absorbing hood (26) is provided at its end remote from the fire protection means (8) with an in particular upper edge (32) arranged at a predetermined distance (34) from an upper edge (36) of the ceiling (6).

9. Device according to one of claims 1 to 8, characterised in that the sound-absorbing hood (26) provided downstream of the fire protection means (8) overlaps the fire protection means (8) over a predetermined, preferably expanded region (30), this region (30) in particular being in the form of a substantially L-shaped collar, and/or that the region (30) is expanded in relation to the remaining part of the sound-absorbing hood (26) and/or that the region (30) embraces the fire protection means (8) over a predetermined length, the length (44) in particular being between 2 and 4 cm and preferably substantially 3 cm.

10. Device according to one of claims 1 to 9, characterised in that the abutting or overlapping longitudinal edges of the sound-absorbing hood (26) are connected by means of an adhesive tape or by means of a glued joint.

## Revendications

1. Dispositif de cloisonnement et de réduction simultanée de la transmission acoustique d'une traversée (4) d'un plafond (6) ou d'un mur d'un bâtiment, un conduit (2, 3) étant prévu dans la traversée (4), dispositif qui comprend un dispositif pare-feu (8) avec une couche (18) de matériau expansé entourant le conduit, ***caractérisé en ce qu'***au niveau de la traversée (4), il est prévu un capot d'isolation acoustique (26) entourant à distance le conduit (2, 3) en faisant immédiatement suite au dispositif pare-feu (8) dans la direction axiale, ***en ce que*** le capot d'isolation acoustique (26) se compose d'un matériau souple ou se compose de deux parties, les bords longitudinaux raccordés bout à bout ou se chevauchant étant assemblés entre eux, et ***en ce qu'***entre la surface extérieure (22) du conduit (3) et la couche (18) de matériau expansé, il est prévu au moins une couche (24, 25) de matériau isolant acoustique.

2. Dispositif selon la Revendication 1, ***caractérisé en ce qu'***à l'intérieur du dispositif pare-feu (8) et/ou du capot d'isolation acoustique (26), il est prévu un manchon (7), lequel est conformé de préférence en manchon double, pour relier les deux conduits (2, 3).

3. Dispositif selon la Revendication 2, ***caractérisé en ce que*** le manchon (7) comprend au moins une moulure (38) et, dans le cas d'une configuration en manchon double, au moins quatre moulures (38), une bague (39) en matière élastique étant placée dans la moulure (38) respective, de telle sorte qu'un contact direct entre le conduit (2, 3) et le manchon (7) est évité et/ou ***en ce que*** le diamètre intérieur (42) du capot d'isolation acoustique (26) est au moins égal ou supérieur au diamètre extérieur du manchon (7) et/ou de sa moulure (38).

4. Dispositif selon la Revendication 2 ou 3, ***caractérisé en ce que*** la couche (18) de matériau expansé présente un diamètre intérieur égal ou supérieur au diamètre extérieur du manchon (7) ou de sa moulure (38).

5. Dispositif selon l'une quelconque des Revendications 1 à 4, ***caractérisé en ce que*** le diamètre intérieur (42) du capot d'isolation acoustique (26) est sensiblement égal au diamètre intérieur (19) de la couche (18) de matériau expansé du dispositif pare-feu (8).

6. Dispositif selon l'une quelconque des Revendications 1 à 5, ***caractérisé en ce que*** la couche (24, 25) de matériau isolant acoustique a une configuration annulaire.

7. Dispositif selon l'une quelconque des Revendications 2 à 6, ***caractérisé en ce que*** la couche (25) est placée entre la surface extérieure du manchon (7) et la surface intérieure du dispositif pare-feu (8).

8. Dispositif selon l'une quelconque des Revendications 1 à 7, ***caractérisé en ce que*** le capot d'isolation acoustique (26) présente à son extrémité opposée au dispositif pare-feu (8) un bord (32) en particulier supérieur, qui présente une distance prédéterminée (34) vis-à-vis d'un bord supérieur (36) du plafond (6).

9. Dispositif selon l'une quelconque des Revendications 1 à 8, ***caractérisé en ce que*** le capot d'isolation acoustique (26) prévu à la suite du dispositif pare-feu (8) recouvre le dispositif pare-feu (8) dans une zone prédéterminée (30) de préférence élargie, cette zone (30) étant conformée de préférence en col sensiblement en forme de L et/ou ***en ce que*** la zone (30) est d'une conformation élargie par rapport au reste du capot d'isolation acoustique (26), et/ou ***en ce que*** la zone (30) emboîte par le dessus le dispositif pare-feu (8) sur une longueur prédéterminée, la longueur (44) étant comprise en particulier entre 2 et 4 cm et valant de préférence sensiblement 3 cm.

10. Dispositif selon l'une quelconque des Revendications 1 à 9, ***caractérisé en ce que*** les bords longitudinaux, raccordés bout à bout ou se chevauchant, du capot d'isolation acoustique (26) sont assemblés au moyen d'un ruban adhésif ou d'un assemblage collé.
